# EUROPÄISCHE PATENTSCHRIFT

(11) **EP 3 088 618 B1**
(45) Veröffentlichungstag und Bekanntmachung des Hinweises auf die Patenterteilung: **23.10.2019**
(21) Anmeldenummer: 16167633.3
(22) Anmeldetag: 29.04.2016
(51) Int. Cl.: E03F 5/10, E03F 3/04, F16L 55/00, F16L 55/165, E03C 1/00

(54) **ABWASSERROHR MIT VERÄNDERBAREM QUERSCHNITT**
WASTE WATER TUBE WITH A VARIABLE CROSS SECTION
CONDUITE D'EGOUT AYANT UNE SECTION MODIFIABLE

(30) Priorität: 30.04.2015 DE 202015102201 U
(43) Veröffentlichungstag der Anmeldung: 02.11.2016
(73) Patentinhaber: Büttner, Pierre, 35392 Gießen (DE); Hrisova, Ivana, 35392 Gießen (DE)
(72) Erfinder: Büttner, Pierre, 35392 Gießen (DE); Hrisova, Ivana, 35392 Gießen (DE)
(74) Vertreter: Tergau & Walkenhorst Patentanwälte PartGmbB

(56) Entgegenhaltungen:
- EP-A2- 1 564 335
- WO-A1-01/88289
- WO-A1-2014/051235
- DE-A1- 3 342 306
- DE-A1- 3 607 207
- DE-A1- 3 941 513
- DE-U1-202004 018 084
- FR-A1- 2 856 456

## Beschreibung

Die Erfindung betrifft ein Abwasserrohr mit einem veränderbaren Querschnitt. Sie betrifft weiterhin ein Einlegeteil für ein Abwasserrohr.

Für den Transport von Abwasser in Wohn- und Industriegebieten sind Abwasserrohrsysteme mit Abwasserohren vorgesehen. Diese Abwasserrohre erfüllen ihre Funktion auf Zeitskalen von mehreren Jahrzehnten, insbesondere zwischen 40 und 80 Jahren. Bei ihrer Konstruktion und ihrem Bau werden sie gewöhnlich für die aktuelle Abwasserabfuhrsituation ausgelegt.

Aufgrund der langen Nutzungsdauer können sich allerdings Veränderungen in den zugehörigen Wohngebieten ergeben, auf die nicht reagiert werden kann. Zum einen werden in den nächsten Jahrzehnten ein Bevölkerungsrückgang in ländlichen Gebieten und ein Bevölkerungszuwachs in urbanen Gebieten erwartet. Zum anderen führt der Klimawandel zu einer Häufung von Starkregenereignissen. Dies führt zu folgenden Problemen. Bei zu viel Abwasser durch Starkregen kann das Kanalsystem überlastet werden, was zum Aufkommen von Hochwasser führen kann. Die Abwasserrohre können materielle Schäden nehmen, was zu Umweltbelastungen führt. Durch die Abnahme des geförderten Abwassers in ländlichen Gebieten kommt es zu Sedimentation in den Abwasserrohren, was mit erhöhten Reinigungskosten verbunden ist. In urbanen Gebieten nimmt aufgrund des Bevölkerungszuwachses die Belastung des Abwassersystems zu und kann zu einer Überlastung führen aufgrund der Niedrigdimensionierung des ursprünglich gebauten Systems. Durch Undichtigkeiten und weitere Schäden der Abwasserrohre wird einerseits die Umwelt belastet. Andererseits kann es zu Verstopfungen und Überflutungen kommen. Zudem kann es zu einer Verdünnung des Schmutzwassers kommen. Darüber hinaus entstehen an den Abwasserrohren im Laufe der Jahre Undichtigkeiten und andere Schäden.

Der Erfindung liegt daher die Aufgabe zugrunde, ein Abwasserrohr bereitzustellen, das über die typischen Nutzungszeiträume hinweg an veränderbare Anforderungen an die Abwasserabführung adaptierbar ist.

Diese Aufgabe wird erfindungsgemäß gelöst mit einem Abwasserrohr mit den Merkmalen der Ansprüche 1 und 3.

Vorteilhafte Ausgestaltungen der Erfindung sind Gegenstand der Unteransprüche.

Die Erfindung geht von der Überlegung aus, dass bei Abwassersystemen die Durchströmgeschwindigkeit des Abwassers im Laufe der Zeit variieren kann und für ihren Betrieb und ihre Erhaltung äußerst relevant ist. Wenn sie zu niedrig ist, drohen Sedimentation bzw. Ablagerungen und Geruchsbildung. Wenn sie zu hoch ist, kann eine Überlastung des Abwassersystems erfolgen. Bei gegebener Wassermenge, die in das Abwassersystem eintritt, ist der verfügbare Strömungsquerschnitt relevant für die resultierende Strömungsgeschwindigkeit.

Wie nunmehr erkannt wurde, kann die Durchflussgeschwindigkeit bedarfsgerecht variiert werden, indem das Rohr derart ausgebildet ist, dass sein Querschnitt veränderbar ist und somit an die unterschiedlichen Szenarien anpassbar ist. Wenn gemessen an der Dimensionierung des Abwasserohrs wenig Abwasser durchgeführt wird, kann der Durchflussquerschnitt verkleinert werden, was zu einer höheren Durchflussgeschwindigkeit führt. Bei hohen Abwasseraufkommen kann der Querschnitt vergrößert bzw. im Wesentlichen vollständig freigegeben werden, so dass das Wasser abgeführt werden kann.

Der Durchflussquerschnitt wird gebildet, sofern das Einlegeteil radial vollständig an der Innenfläche des Rohrmantels anliegt, durch einen von Wasser durchströmbaren Bereich, der vollständig von einem Innenquerschnitt des Einlegeteils begrenzt wird. Sofern das Einlegeteil nicht vollständig sondern nur bereichsweise radial an der Innenfläche anliegt, wird der Durchflussquerschnitt begrenzt bereichsweise durch die Innenfläche des Rohrmantels und bereichsweise durch radial in das Abwasserrohr hineinragende Bereiche bzw. Flanken des Einlegeteils. Als Abwasserohr wird ein Rohr verstanden, dass bezüglich seiner Dimensionierung und seines Materials geeignet ist, Abwasser abzuführen. Das Abwasserrohr hat dabei vorteilhafterweise einen freien Querschnitt bzw. Durchflussquerschnitt von wenigstens 50 cm. Der Rohrmantel ist vorteilhafterweise im Wesentlichen aus Beton, Polyethylen (PE-Rohr), Glasfaser/Kunststoff (GFK-Rohr), Steinzeug, Polypropylen (PP), Graugussrohr oder PVC-Rohr gefertigt. Die bedarfsweise Veränderung des Durchflussquerschnittes umfasst sowohl die aktive Veränderung als auch die passive Veränderung. Der Durchflussquerschnitt bezeichnet dabei den für das Abwasserrohr durchfließende Wasser bzw. Abwasser verfügbaren Querschnitt. Als Einlegeteil wird eine Komponente bezeichnet, die innerhalb des Rohrmantels angeordnet ist und zumindest teilweise auf der Innenfläche des Rohrmantels aufliegt bzw. an ihr anliegt. In einer bevorzugten Ausführung bedeckt das Einlegeelement im Wesentlichen vollständig die Innenfläche bzw. den Innenumfang des Rohrmantels. Diese Ausführung eignet sich besonders bei sanierungswürdigen Kanälen, da Risse im Rohrmantel nicht zu einem Austreten von Schmutzwasser führen. Das herkömmliche Sanierungsverfahren mit einem "GFK-Inliner" kann auf diese Weise abgelöst werden. Zudem wird der Austritt von Schmutzwasser durch Risse im Rohrmantel verhindert, wodurch die Umwelt geschont wird. Bei eindringendem Grundwasser wird das Verdünnen von Schmutzwasser (Klärprozesse) verhindert.

In einer Ausführungsform weist das Einlegeteil wenigstens eine radial in den Innenbereich des Abwasserrohrs hineinragende Kammer auf, wobei diese Kammer in Abhängigkeit von der das Abwasserrohr pro Zeiteinheit durchströmenden Wassermenge den Durchflussquerschnitt verändert. In diesem Fall wird also eine passive Variation des Durchflussquerschnittes erzielt, so dass das Einlegeteil seine Form als Funktion der durchströmenden Wassermenge verändert. Dies wird vorteilhafterweise dadurch erzielt, dass die jeweilige Kammer eine Vorspannung hat, die zu einer Ausdehnung in das Innere des Abwasserrohrs führt und in elastischer Weise dem durchströmenden Wasser nachgibt. Mit steigendem Pegelstand im Kanal bzw. Abwasserrohr und der daraus resultierenden Kraft wird die entgegengesetzte Kraft aus der Vorspannung des Einlegeteils überstiegen und somit eine Querschnittsänderung hervorgerufen. Die querschnittsvermindernden Kammern werden aufgrund des Gewichts der Wassermengen an die äußere Mantelfläche gedrückt.

Bei einer derartigen Ausbildung sind keine Sensoren zur Erkennung der momentan durchströmenden Wassermenge pro Zeiteinheit erforderlich, wodurch eine besonders einfache Bauweise erreicht wird, die zudem kostengünstig realisierbar ist und eine Einsparung von CO₂ ermöglicht.

Bevorzugt ist eine einzige Kammer oder eine gerade Anzahl von Kammern vorgesehen, so dass ein zu einer durch das Abwasserrohr vertikal verlaufenden Symmetrieebene symmetrisch ausgebildetes Einlegelement realisiert wird. Dadurch wird eine gleichmäßige Belastung des Abwasserrohrs erzielt.

Der freigegebene Durchflussquerschnitt ist vorteilhafterweise umso größer, je höher die das Abwasserrohr pro Zeiteinheit durchströmenden Wassermenge ist. Durch das Wasser wird die Kammer in radialer Richtung in Richtung der Innenfläche des Rohrmantels gedrückt. Bevorzugt ist daher das Einlegeteil elastisch ausgebildet, so dass es dem Wasserdruck nachgeben kann.

In einer alternativen Ausführungsform weist das Einlegeteil wenigstens eine radial hineinragende Kammer auf, welche mit einem Befüllmedium befüllbar ist, wobei der freigegebene Durchflussquerschnitt abhängt von der Stärke der Befüllung der Kammer mit dem Befüllmedium. Dies entspricht einer aktiven Steuerung des Durchflussquerschnittes. Je mehr Befüllmedium die jeweilige Kammer enthält, umso mehr wird der Durchflussquerschnitt verengt, indem die Kammer in das Innere des Abwasserrohrs hineinragt. Das Befüllmedium ist vorzugsweise Luft. Die Ausdehnung der jeweiligen Kammer kann beispielsweise mit Hilfe eines Kompressors erfolgen. Zur Bestimmung der aktuell pro Zeiteinheit durch das Abwasserrohr durchströmenden Abwassermenge wird optional zumindest ein Sensor eingesetzt. Dazu kann beispielsweise ein magnetisch-induktiver Durchflussmesser oder ein ähnlicher Sensor angebracht werden. Derartige Sensoren sollten aus Kostenerwägungen nur an wichtigen Knotenpunkten von dem Kanalnetz angebracht werden, insbesondere in den Kanalschächten.

Es kann auch vorgesehen sein, dass auch bei der oben dargestellten passiven Ausführung wie oben beschrieben die Kammern 30, 34 bedarfsweise mit Luft befüllbar sind. Dies könnte beispielsweise dann genutzt werden, wenn das Material des Einlegemantels nicht mehr die gewünschte Vorspannung aufweist.

In Abhängigkeit von dem Signal des wenigstens einen Sensors wird dann Befüllmedium in die jeweilige Kammer geleitet oder aus ihr abgeführt. Die jeweilige Kammer ist in dieser Variante bevorzugt mit einer Leitung zur Zuführung und/oder Abführung des Befüllmediums versehen.

Das Einlegeteil besteht vorteilhafterweise im Wesentlichen aus Ethylen-Propylen-Dien-Kautschuk (EPDM) oder Kunststoff bzw. ist vorteilhafterweise aus diesen Materialien gefertigt. Dieses Material ist dehnbar, robust, stabil, alterungsbeständig und rissbeständig. Im Allgemeinen wird bevorzugt ein recyclebares Material gewählt.

Der maximal freigegebene Durchflussquerschnitt wird bevorzugt bei maximaler Verengung um 20 % bis 40 %, besonders im Wesentlichen 30 % verengt.

Das Einlegeteil bzw. Einsetzteil weist bei maximal verengtem Durchflussquerschnitt bevorzugt ein im Wesentlichen V-förmiges Profil auf, wodurch die Fließgeschwindigkeit in vorteilhafter Weise beeinflusst werden kann, indem sie erhöht wird. Je höher die Fließgeschwindigkeit ist, umso geringer ist die Wahrscheinlichkeit von Ablagerungen.

Bevorzugt ist wenigstens ein Wärmetauschelement vorgesehen, das mit einem Wärmetauschmedium zur Aufnahme der Wärme des Abwassers gefüllt ist. Auf diese Weise kann die im Abwasser durch das Abwasserrohr geführte Wärme genutzt werden zur externen Wärmeaufbereitung in einem Wärmetauscher und anschließender Wärmeabgabe an Wohnhäuser, Gewerbe- oder Industriebetriebe. Neben der Wärmeaufbereitung im Winter, kann das ganzjährlich ca. 10 bis 15 Grad warme Wasser auch zur Kühlung von Gebäuden genutzt werden.

Das Wärmetauschmedium ist vorteilhafterweise Wasser. In diesem Fall führt eine mögliche Leckage durch den Austritt des Wassers in den Boden und das Grundwasser nicht zu einer erhöhten Belastung der Umwelt, wie das bei anderen Wärmetauschmedien der Fall sein könnte. Es wird vor allem eine chemische Verunreinigung des Abwassers verhindert, da das System im Normalfall (unbeschädigt) nach außen dicht ist.

Der Rohrmantel bzw. die äußere Umhüllung des Abwasserrohrs besteht vorzugsweise aus Beton, Polyethylen, Glasfaser/Kunststoff (GFK-Rohr), Steinzeug, Polypropylen (PP), Graugussrohr oder PVC-Rohr.

In einer bevorzugten Ausführungsform des Abwasserrohrs weist der Rohrmantel an seiner Innenfläche bzw. Innenseite wenigstens ein Haltelement auf, wobei das Einlegeteil wenigstens ein Befestigungselement aufweist, welches mit dem Haltelement eine, bevorzugt lösbare, Befestigung des Einlegeteils am Rohrmantel ermöglicht.

Haltelemente und Befestigungselemente sind Verbindungselemente, mit deren Hilfe das Einlegeteil bzw. Einsetzteil an der Innenseite des Rohrmantels befestigt wird. Die Haltelemente sind bevorzugt in den Rohrmantel integriert und besonders bevorzugt einstückig mit dem Rohrmantel ausgeführt. Die Befestigungselemente sind bevorzugt in das Einlegeteil bzw. Einsetzteil integriert und besonders bevorzugt einstückig mit dem Einlegeteil bzw. Einsetzteil ausgeführt. Rohrmantel und/oder Einlegeteil werden vorzugsweise mittels eines Extruders durch Extrusion gefertigt. Für den Rohrmantel wird vorteilhafterweise noch ein Spritzgussverfahren bzw. Urformverfahren angewendet. Die Halte/Befestigungselemente werden vorzugsweise direkt bei der Extrusion bzw. dem Urformverfahren mit hergestellt, so dass Rohrmantel und jeweiliges Halteelement sowie Einlegeteil und jeweiliges Befestigungselement vorzugsweise aus einem Stück bestehen bzw. gefertigt sind. Der Rohrmantel ist in dieser Ausführung bevorzugt im Wesentlichen aus Polypropylen und/oder Polyvinylchlorid gefertigt. Das Einlegeteil bzw. Einsetzteil ist dabei bevorzugt im Wesentlichen aus EPDM gefertigt.

Bevorzugt wird zwischen einem inneren Bereich des Rohrmantels und dem Einlegeteil bzw. Einsetzteil jeweils zwischen zwei Haltelementen jeweils eine Kammer gebildet. Bei maximaler Verengung des Durchflussquerschnittes weist die jeweilige Kammer bevorzugt im Querschnitt die Form eines Auges bzw. Ellipsoides auf. Die Kammer ist bevorzugt ausgebildet zur Befüllung mit einem Befüllmedium, welches bevorzugt ein Fluid ist. Die Verbindung des Einlegeteils bzw. Einsetzteils mit dem Rohrmantel durch die Verbindungselemente ist bevorzugt derart dicht ausgestaltet, dass bei Befüllung der jeweiligen Kammer durch das Befüllmedium dieses nicht in das Innere des Abflussrohes austritt.

Das Einlegeteil liegt bevorzugt bereichsweise an wenigstens einem Haltelement am Rohrmantel an. Die Verbindung zwischen Einlegeteil und Rohrmantel ist in einer bevorzugten Ausführungsform luftdicht ausgebildet, so dass bei Einleitung von Luft, Gas bzw. einem Fluid in die jeweilige Kammer der Durchflussquerschnitt des Abwasserrohrs bedarfsweise verengt wird. In dieser Ausführung ist in einer bevorzugten Ausführungsform wenigstens ein Wärmetauschelement vorgesehen, das mit einem Wärmetauschmedium zur Aufnahme der Wärme des Abwassers gefüllt ist oder befüllbar ist.

Vorteilhafterweise sind am Rohrmantel bzw. an seiner Innenfläche drei Halteelemente vorgesehen. Diese sind bevorzugt am Innenbereich derart angeordnet, dass zwei äußere an einem inneren Kreisumfang des Rohrmantels angeordnete Haltelemente jeweils gleich weit von einem mittig zwischen den äußeren Haltelementen angeordneten Haltelement entfernt sind, welches im verbauten Zustand des Abwasserrohres bevorzugt den tiefsten Punkt der drei Haltelemente annimmt, wobei die Entfernung bevorzugt als Kreissehne am Innendurchmesser des Rohrmantels bestimmt wird.

Das Einlegeteil bzw. Einsetzteil weist vorteilhafterweise im Wesentlichen einen V-förmigen Querschnitt auf mit einem Scheitelpunkt und zwei symmetrisch in Bezug auf den Scheitelpunkt angeordneten Endpunkten, und wobei das Einlegeteil bzw. Einsetzteil im Bereich des Scheitelpunktes und der beiden Endpunkte des Querschnittes durch Befestigungselemente an den Haltelementen befestigt ist.

Das jeweilige Befestigungselement ist bevorzugt als Kederleiste ausgebildet. Das korrespondierende Halteelement weist dementsprechend bevorzugt einen Hohlraum zur Aufnahme der Leiste auf. Bevorzugt wird durch jeweils ein Halteelement und ein Befestigungselement eine formschlüssige Verbindung von Einlegeteil bzw. Einsetzteil und Rohrmantel gebildet.

Die Erfindung betrifft auch ein Rohr, mit veränderbarem Querschnitt, umfassend
- einen Rohrmantel mit einer Innenfläche;
- ein Einlegeteil bzw. Einsetzteil, das zumindest bereichsweise an der Innenfläche des Rohrmantels anliegt und alleine oder zusammen mit einem Bereich der Innenfläche des Rohrmantels einen Durchflussquerschnitt für Abwasser definiert;
wobei das Einlegeteil bzw. Einsetzteil derart ausgebildet ist, dass es bedarfsweise den Durchflussquerschnitt verkleinert oder vergrößert. Die vorteilhaften Ausgestaltungen des Abwasserrohrs sind im Rahmen der Erfindung gleichermaßen auf das Rohr übertragbar.

Die Erfindung betrifft auch ein Abwasserrohr mit veränderbarem Querschnitt, umfassend
- einen Rohrmantel mit einer Innenfläche;
- ein Einlegeteil bzw. Einsetzteil, das alleine oder zusammen mit einem Bereich der Innenfläche des Rohrmantels einen Durchflussquerschnitt für Abwasser definiert;
wobei der Rohrmantel an seiner Innenseite wenigstens ein Haltelement aufweist, wobei das Einlegeteil bzw. Einsetzteil wenigstens ein Befestigungselement aufweist, welches mit dem Haltelement eine, bevorzugt lösbare, Befestigung des Einlegeteils am Rohrmantel ermöglicht, und wobei das Einlegeteil derart ausgebildet ist, dass es bedarfsweise den Durchflussquerschnitt verkleinert oder vergrößert.

Die Erfindung betrifft auch ein Einlegeteil für ein Rohr, insbesondere ein Abwasserohr, welches die oben beschriebenen Eigenschaften aufweist. Das Einlegeteil umfasst vorzugsweise einen Einlegemantel bzw. einen Einlegekörper, der elastisch biegsam bzw. verformbar ist, so dass er in einem Abwasserrohr derart angeordnet werden kann, dass er zumindest teilweise, insbesondere in einem unteren Bereich des Abwasserohrs, an der Innenfläche des Rohrmantels anliegt. Das Einlegeteil weist vorzugsweise wenigstens eine Kammer auf, die von dem Einlegemantel bedarfsweise derart absteht, dass im eingelegten Zustand des Einlegemantels im Rohrmantel der Durchflussquerschnitt verringert wird, wobei die Kammer vorteilhafterweise radial nach innen von dem Einlegemantel absteht. Sie betrifft insbesondere ein Einlegeteil, für ein oben beschriebenes Abwasserrohr, umfassend einen elastisch verformbaren Einlegemantel und wenigstens eine Kammer, die bedarfsweise durch Vorspannung und/oder Befüllung mit einem Befüllmedium von dem Einlegemantel absteht. Die im Zusammenhang mit dem Einlegemantel des Abwasserrohrs beschriebenen Eigenschaften bzw. Merkmale des Einlegemantels sind hierauf übertragbar.

Die Erfindung betrifft weiterhin ein Abwasserrohrsystem, umfassend eine Mehrzahl von insbesondere miteinander zumindest teilweise strömungsmäßig verbundenen Abwasserrohren, welche die oben beschriebenen Merkmale aufweisen. Es wird auf diese Weise ein flexibles Kanalnetz realisiert, welches auf die benötigten Anforderungen automatisch reagieren kann und zusätzlich CO₂ einspart, indem die Wärme aus dem Abwasser genutzt wird.

Die Vorteile der Erfindung liegen insbesondere darin, dass mit Hilfe des Einlegeteils durch den veränderbaren Querschnitt das Rohr an verschiedene Anforderungen an Abführung von Abwasser angepasst werden kann. Ein aktiver Beitrag zum Hochwasserschutz entsteht durch die Möglichkeit, in dem jeweiligen Kanal einen Stauraum bereitzustellen. Ein Einlegeteil, das die gesamte Innenfläche des Rohrmantels abdeckt, kann die Verwendbarkeit von sanierungsbedürftigen Abwasserrohren verbessern. Das Einlegeteil lässt sich in kurzer Zeit in vorhandene Abwasserrohre bzw. Kanäle einbauen. Bei der passiven Variante des Abwasserrohrs entstehen geringe Baukosten und minimale Betriebskosten. Durch die Ausbildung des Einlegeteils bzw. Einsetzteils und Abwasserrohrs mit jeweils komplementären Verbindungselementen wird eine stabile und dauerhafte Befestigung erreicht und vor allem eine statische Tragfähigkeit der Sanierungsmaßnahme. Zudem kann unter Umständen Material eingespart werden, da die jeweilige Kammer bereichsweise von der Innenfläche des Rohrmantels gebildet wird.

Das beschriebene Abwasserrohr ist in Bestandsnetzen und Neubaunetzen einsetzbar. Es stellt eine verhältnismäßig einfache und kostengünstige Lösung dar, um auf die Folgen des demografischen Wandels und des Klimawandels zu reagieren. Es stellt auch eine Sanierungsmaßnahme für sanierungsbedürftige Abwasserrohre dar.

Ein Ausführungsbeispiel der Erfindung wird anhand einer Zeichnung näher erläutert. Darin zeigen in stark schematisierter Darstellung:
- FIG. 1: ein Abwasserrohr in einer ersten bevorzugten Ausführungsform mit maximal verengtem Durchflussquerschnitt in einem Querschnitt;
- FIG. 2: das Abwasserrohr gemäß FIG. 1 in einer perspektivischen Darstellung;
- FIG. 3: das Abwasserohr gemäß FIG. 1 mit maximal freigegebenem Durchflussquerschnitt in einem Querschnitt;
- FIG. 4: das Abwasserohr gemäß FIG. 3 in einer perspektivischen Darstellung;
- FIG. 5: ein Abwasserrohr in einer zweiten bevorzugten Ausführungsform mit maximal verengtem Durchflussquerschnitt in einem Querschnitt;
- FIG. 6: das Abwasserrohr gemäß FIG. 5 in einer perspektivischen Darstellung;
- FIG. 7: das Abwasserrohr gemäß FIG. 5 mit maximal freigegebenem Durchflussquerschnitt in einem Querschnitt;
- FIG. 8: das Abwasserrohr gemäß FIG. 7 in einer perspektivischen Darstellung;
- FIG. 9: einen Abwasserkanalschacht mit einem Abwasserrohr in einem Querschnitt;
- FIG. 10: ein Abwasserrohr in einer weiteren bevorzugten Ausführungsform ohne die Kammern 64 und 72;
- FIG. 11: ein Abwasserrohr in einer weiteren bevorzugten Ausführungsform mit maximal verengtem Durchflussquerschnitt in einem Querschnitt;
- FIG. 12: das Abwasserrohr gemäß FIG. 11 in einer Detaildarstellung;
- FIG. 13: das Abwasserrohr gemäß FIG. 11 in einer weiteren Detaildarstellung; und
- FIG. 14: das Abwasserrohr gemäß FIG. 11 in einer perspektivischen Darstellung.

Gleiche Teile sind in allen Figuren mit denselben Bezugszeichen versehen.

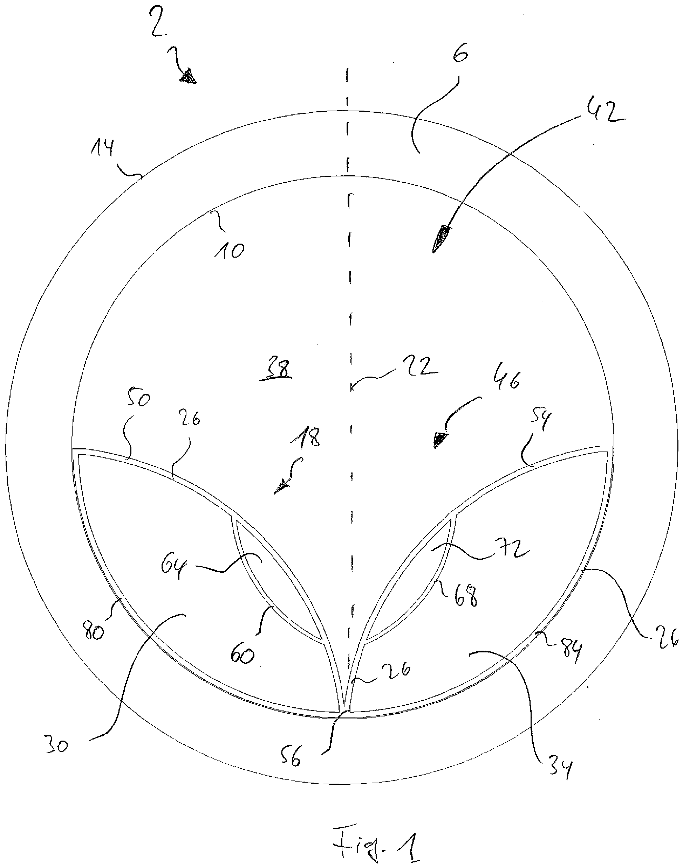

Ein in FIG. 1 im Querschnitt dargestelltes Abwasserrohr 2 weist einen im Wesentlichen zylinderförmigen Mantel 6 bzw. Rohrmantel auf, der beispielsweise aus Gusseisen, Beton, Polyethylen (PE-Rohr), Glasfaser/Kunststoff (GFK-Rohr), Steinzeug, Polypropylen (PP), Graugussrohr oder PVC-Rohr besteht bzw. wenigstens eines dieser Materialien umfasst. Der Mantel 6 weist eine Innenfläche 10 und eine Außenfläche 14 aus. In den Mantel 6 ist ein Einlegeteil 18 eingelegt, welches aus EPDM gefertigt ist. Im Gegensatz zu herkömmlichen Abwasserrohren, die im Wesentlichen nur aus einem Rohrmantel bestehen, umfasst das erfindungsgemäße Abwasserrohr 2 den Mantel 6 bzw. Rohrmantel und das Einlegeteil 18.

Der Querschnitt des Einlegeteils 18 ist spiegelsymmetrisch zu einer Symmetrieebene 22, die bei einer Installation des Abwasserohrs im Wesentlichen in vertikaler Richtung verläuft. Das Einlegeteil 18 weist einen Einlegemantel 26 auf, der zwei Kammern 30, 34 begrenzt. Ein Durchflussquerschnitt 38 für Abwasser wird in einem oberen Bereich 42 durch die Innenfläche 10 und in einem unteren Bereich durch eine Flanke 50 des Einlegemantels 26, die die Kammer 30 teilweise begrenzt und eine Flanke 54 des Einlegemantels 26, die die Kammer 34 teilweise begrenzt, gebildet. Der Durchflussquerschnitt 38 für Abwasser hat im Querschnitt gesehen im unteren Bereich 46 eine V-Form mit konvex gebogenen Flanken 50, 54. Die beiden Flanken 50, 54 treffen sich an einem tiefsten Punkt bzw. Scheitelpunkt 56.

Durch einen Bereich der Flanke 50 und einem Teilabschnitt 60 des Einlegemantels 26 wird eine Wärmetauschkammer 64 begrenzt. In symmetrischer Weise wird durch einen Bereich der Flanke 54 und einem Teilabschnitt 68 des Einlegemantels 26 eine weitere Wärmetauschkammer 72 begrenzt. Die Flanke 50 und ein unterer Teilabschnitt 80 des Einlegemantels 26 begrenzen die Kammern 30, 64 und bilden für sie eine linsenförmige Umhüllung. Gleichermaßen begrenzen die Flanke 54 und ein unterer Teilabschnitt 84 die beiden Kammern 34, 72 und umhüllen sie in einer linsenförmigen Kontur.

Die FIG. 1 zeigt das Abwasserohr 2 in einem Betriebszustand, in dem keine oder nur eine geringe Abwasserströmung vorliegt. Der maximal mögliche Durchflussquerschnitt, der im Wesentlichen durch die Innenfläche 10 begrenzt wird, wird vorliegend um ca. 29 % verringert bzw. verengt. Durch den V-förmigen Durchflussquerschnitt 38 wird die Fließgeschwindigkeit des durch das Abwasserrohr 2 fließenden Abwassers erhöht, wodurch die Wahrscheinlichkeit von Ablagerungen verringert wird. Das Abwasserrohr 2 ist dazu ausgebildet, in passiver Art den Durchflussquerschnitt 38 bzw. offenen Querschnitt im Abwasserrohr 2 in Abhängigkeit von der momentan durchfließenden Wassermenge zu verändern.

In einer weiteren bevorzugten Ausführungsform wird die Veränderung des Durchflussquerschnittes aktiv durchgeführt, indem bedarfsweise in die Kammern 30, 34 ein Befüllmedium eingefüllt oder ausgelassen wird. Das Befüllmedium ist vorzugsweise Luft. Um den Durchflussquerschnitt zielgerichtet zu verringern, wird das Befüllmedium in die Kammern 30, 34 gefüllt, bis die gewünschte Verkleinerung bzw. Gesamtgröße des Durchflussquerschnittes erreicht ist. Durch ein Ablassen des Befüllmediums, bevorzugt durch ein Überdruckventil, aus den Kammern 30, 34 kann der Durchflussquerschnitt wieder zielgerichtet verkleinert werden. Wenn der Pegelstand im Kanal steigt, erhöht sich die Last auf das Einlegeteil 18 und demnach erhöht sich der Druck in den Kammern 30 und 34. Wenn ein individuell gewählter Druckbereich überschritten wird, entlässt das Ventil die Luft aus dem System.

Die FIG. 1 entspricht in diesem Fall, in dem die Kammern 30, 34 vollständig befüllt sind. Die Kammern 30, 34 dienen als querschnittsregulierende Kammer. Im Falle eines Starkregenereignisses wird die Luft aus den Kammern 30, 34 innerhalb kürzester Zeit entlassen. Somit kann innerhalb von kürzester Zeit bis zu 29 % mehr Querschnittsfläche zur Verfügung gestellt werden, d.h. der Durchflussquerschnitt 38 wird um ca. 29 % vergrößert. Bei einem Durchmesser DN 1000 (1 m) und 1 km Länge des Abwasserrohrs 2 bzw. Kanals entspricht dies einem zusätzlichen Volumen von ca. 230 m³, was der Menge eines kleinen Regenrückhaltebeckens entspricht (Breite x Tiefe x Höhe = 5 m x 2 m x 23 m = 230 m³).

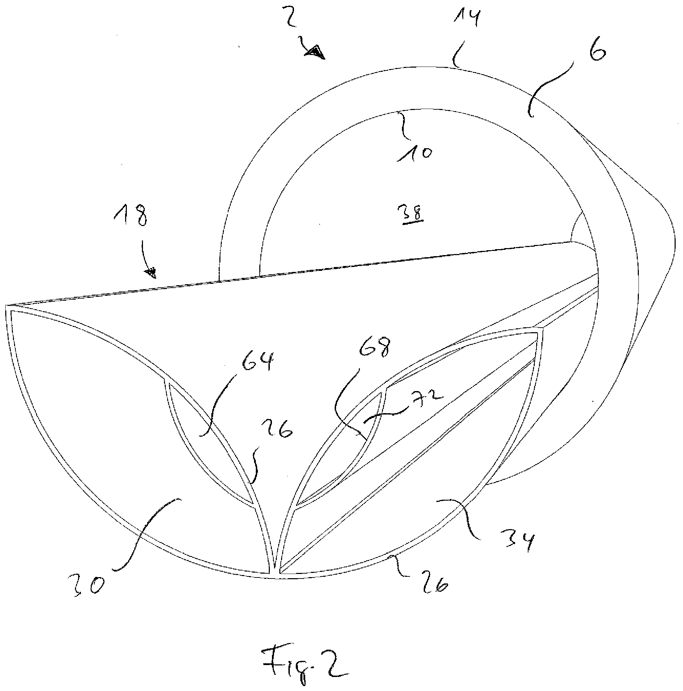

Die beiden Wärmetauschkammern 64, 72, an denen das Abwasser vorbei strömt und die somit in direktem Kontakt zum Abwasser sind, sind mit einem Wärmetauschmedium befüllt, was im gezeigten Ausführungsbeispiel Wasser ist. Das Wasser nimmt von dem durch das Abwasserrohr 2 fließende Abwasserwärme auf, die an anderer Stelle verwendet werden. Das Wasser wird bevorzugt im Kanalschacht entnommen und extern aufbereitet um Bürogebäude, Industriegebäude oder Wohngebäude im Winter mit Wärme zu versorgen und im Sommer abzukühlen. Es wird also eine Energierückgewinnung aus dem erhitzen Schmutzwasser erzielt. Zudem ergibt sich auch eine isolierende Wirkung durch die Kammern 30, 34, wenn diese mit Luft befüllt sind. Die FIG. 2 zeigt das Abwasserrohr 2 gemäß FIG. 1 in einer perspektivischen Darstellung mit einem Schnitt im vorderen Bereich.

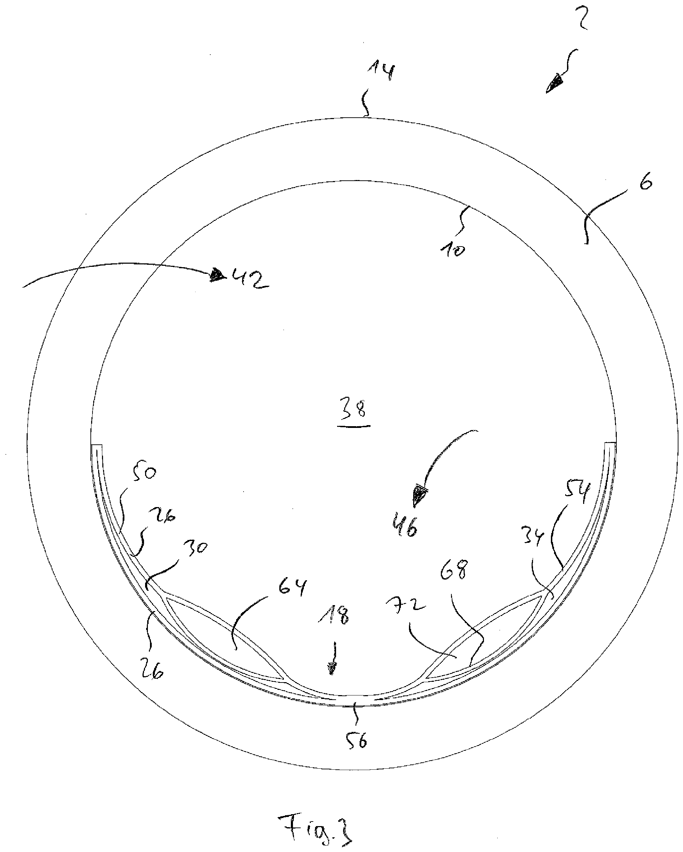

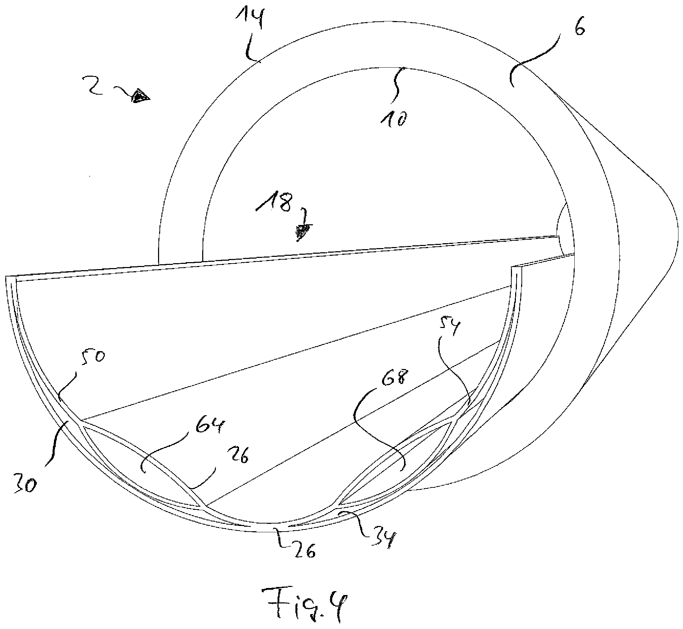

In FIG. 3 ist das Abwasserrohr 2 in einem Querschnitt gezeigt in einer Konfiguration, in dem es einen maximalen Durchflussquerschnitt 38 freigibt. Während die Wärmetauschkammern 64, 72 im Wesentlichen das gleiche Volumen einnehmen, hat sich die Größe der Kammern 30, 34 gegenüber der in FIG. 1 gezeigten Konfiguration des Einlegeteils 18 stark verringert. Durch die Präsenz des Einlegeteils erfolgt somit nur eine sehr geringe Beeinträchtigung des voll verfügbaren Querschnittes. Diese ist im Wesentlichen durch die Größe der Wärmetauschkammern 64, 72 bestimmt. Die Wärmetauschkammern 64, 72 bzw. Wärmetauschelemente können alternativ auch ganz weggelassen werden, so dass die Einschränkung noch geringer ausfällt. Die FIG. 4 zeigt das Abwasserrohr 2 gemäß FIG. 3 in einer perspektivischen Darstellung mit einem Schnitt im vorderen Bereich.

Im Folgenden werden bespielhaft zwei Szenarien beschrieben, in denen sich über einen Zeitraum von 20 Jahren die Einwohnerzahl deutlich ändert. Bei einer Neuplanung eines Wohngebietes, in dem über den Zeitraum von 20 Jahren mit einem Einwohnerzuwachs gerechnet wird, entspricht die Konfiguration des Abwasserohrs 2 aus FIG. 1 dem anfänglichen Zeitpunkt t = 0 Jahre. Der Kanal bzw. das Abwasserrohr 2 werden zu ca. 50 % überdimensioniert gebaut. Die anfallende Abwassermenge ist vergleichsweise gering, so dass der maximal verengte Durchflussquerschnitt 38 bereitgestellt wird. Zum Zeitpunkt t = 20 Jahre fällt mehr Schmutzwasser bzw. Abwasser an. Der Durchflussquerschnitt 38 vergrößert sich aufgrund der größeren Menge an Schmutzwasser und es entsteht im Wesentlichen ein O-Profil bzw. rundes Profil, wodurch die Fließgeschwindigkeit des Schmutzwassers verringert wird, wie es in FIG. 3 dargestellt ist.

In dem zweiten Szenario wird über einen Zeitraum von 20 Jahren mit einem Einwohnerrückgang gerechnet, der sich beispielsweise durch die rückgehende Besiedlung einer ländlichen Gegend ergeben kann. Zum Zeitpunkt t = 0 Jahre wird, wie in FIG. 3 dargestellt, der Durchflussquerschnitt 38 maximal groß bereitgestellt und damit der Kanal nahezu komplett freigegeben. Zu einem Zeitpunkt t = 20 Jahre fällt weniger Schmutzwasser an. Wie in FIG.1 dargestellt, wird der Kanalquerschnitt verringert durch das Einlegeelement 18, welches ein V-Profil aufweist.

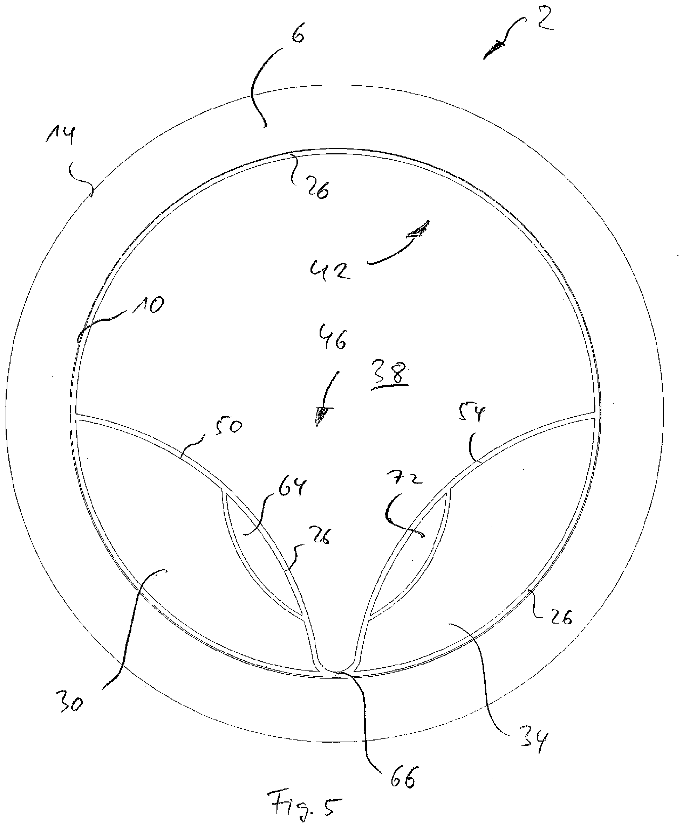

Ein Abwasserrohr 2 in einer zweiten bevorzugten Ausführungsform ist in FIG. 5 in einem Querschnitt dargestellt. Bei dieser Ausführung bedeckt der Einlegemantel 26 die gesamte Innenfläche 10 des Mantels 6. Somit wird der Durchflussquerschnitt 38 vollständig durch die Kontur bzw. Ausdehnung des Einlegemantels 6 bestimmt. In dem unteren Bereich 46 stimmt diese Ausführung mit der Ausführung gemäß FIG. 1 überein mit dem Unterschied, dass am Scheitelpunkt des Einlegemantels 26 eine Trockenwetterabflussrinne 66 vorgesehen ist, die keinen spitzen Querschnitt wie bei der Variante in FIG. 1, sondern einen flacheren, rinnenartigen Querschnitt aufweist. Bei geringem Abwasseraufkommen bzw. Niedrigstbelastungen kann das Abwasser in dieser Rinne fließen, so dass eine Sedimentation verhindert werden kann, die bei einem spitz zulaufen Bereich deutlich wahrscheinlicher auftreten kann. Bei einem spitz zulaufenden Bereich im V-Profil wie bei der Ausführung in FIG. 1 kann nämlich durch fortlaufende Sedimentation eine Verstopfung erfolgen, so dass der Durchflussquerschnitt 38 dauerhaft verringert wird und die vorteilhafte Vergrößerung der Fließgeschwindigkeit durch das V-förmige Profil beeinträchtigt wird.

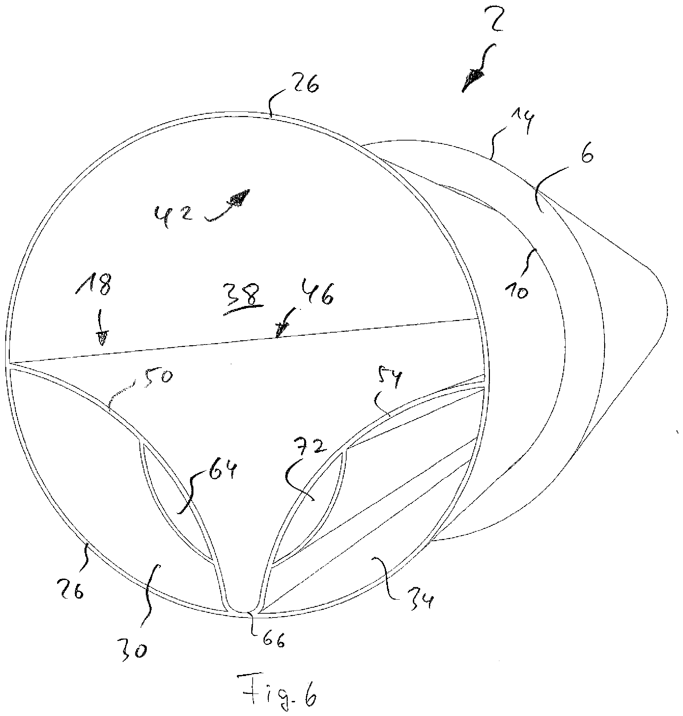

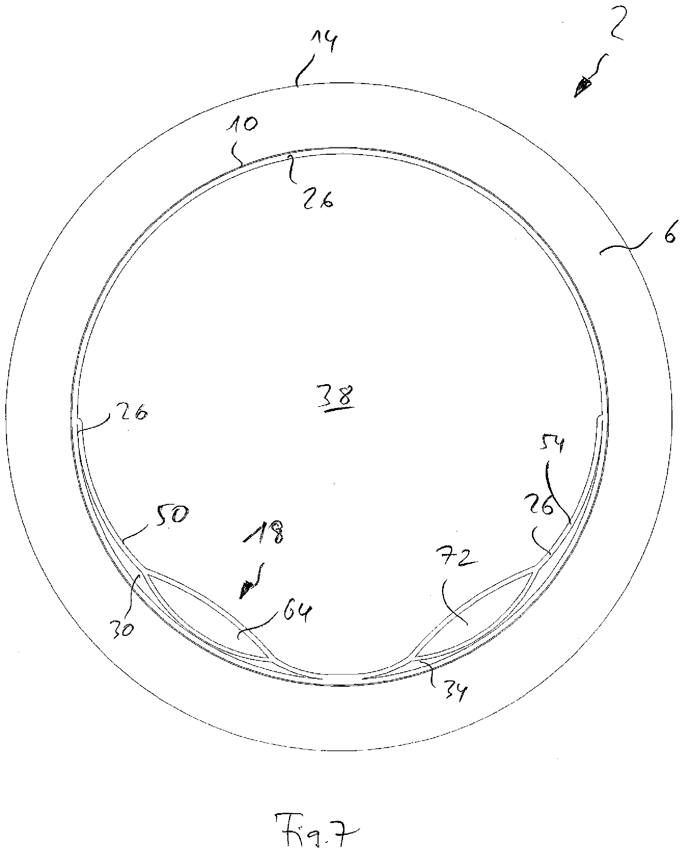

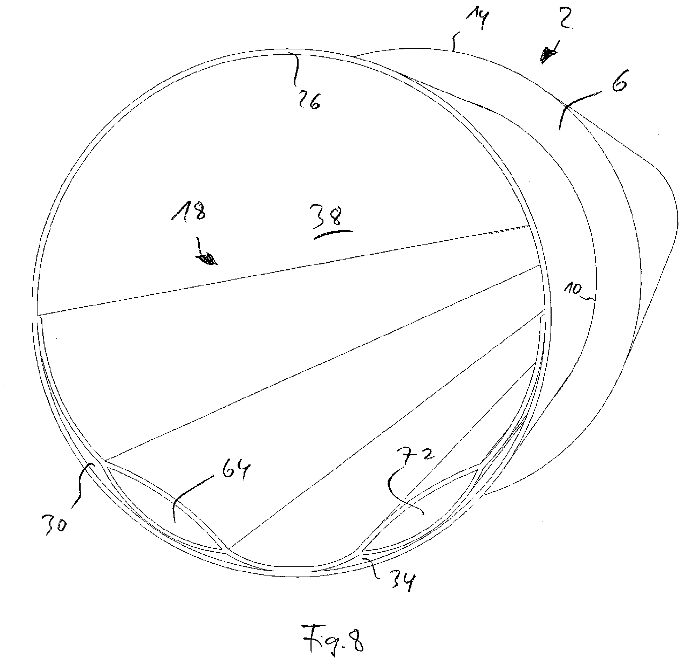

Eine derartige Trockenwetterabflussrinne 66 kann auch bei der Ausführung gemäß FIG. 1 vorgesehen sein. Aufgrund der vollständigen Bedeckung der Innenfläche 10 eignet sich diese Ausführung insbesondere für Abwasserrohre 2 mit einem sanierungsbedürftigen Mantel 6. Da das Abwasser vollständig durch den Einlegemantel 26 strömt, beeinflussen oder verhindern Risse oder andere Schäden im Rohrmantel nicht den Wassertransport durch das Abwasserrohr 2. Die in FIG. 5 gezeigte Konfiguration entspricht dem maximal verengten Durchflussquerschnitt 38. Das Abwasserrohr 2 aus FIG, 5 ist perspektivisch in FIG. 6 dargestellt. Die FIG. 7 zeigt das Abwasserrohr gemäß FIG. 5 in der Konfiguration mit maximal freigegebenem Durchflussquerschnitt 38, die perspektivisch in FIG. 8 dargestellt ist.

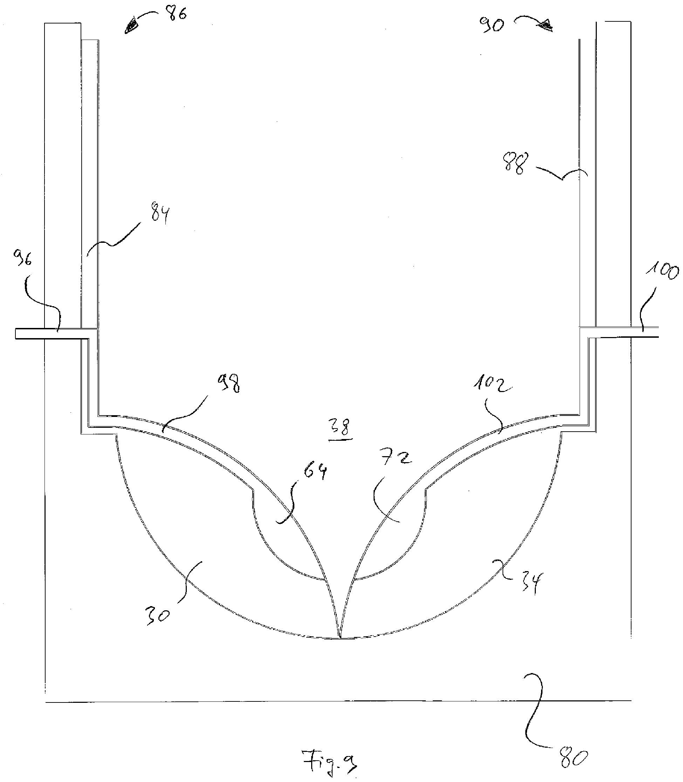

In FIG. 9 ist ein Schnitt durch die Mitte eines Kanalschachtes 80 dargestellt, in den ein Abwasserkanal mündet, der mit einem Abwasserrohr 2 verbunden ist. Im Bereich des Kanalschachtes ist der Abwasserkanal nach oben hin offen, um einen Zugang, beispielsweise für Reparaturarbeiten, zu ermöglichen. Zudem wird bei hohem Abwasseraufkommen eine Überlaufmöglichkeit bereitgestellt. Diese Ausführung entspricht der passiven Variante des Abwasserrohrs 2, bei der passiv die Ausdehnung der Kammern 30, 34 gesteuert wird. Über eine Ausgleichsleitung 84 kann aus der Kammer 30 bedarfsweise Luft abgeführt werden, wenn ihre Ausdehnung durch den Druck von durchströmendem Wasser verringert wird und im umgekehrten Fall Luft wieder angesaugt wird. An einem oberen Ende 86, das bevorzugt unterhalb eines Kanaldeckels angeordnet ist, wird bedarfsweise Luft angesaugt und in die Leitung 84 gespeist. Durch diese Leitung 84 kann die Luft auch abgelassen werden, wenn der Durchflussquerschnitt 38 verringert werden soll. Gleichermaßen kann über eine Befüllleitung 88 die Kammer 34 befüllt oder entleert werden, was an einem oberen Ende 90 erfolgt.

Bei der hier dargestellten passiven Ausführung kann die Luft nicht direkt im Einlegeteil entlassen bzw. wieder eingebracht werden, da dort die Gefahr besteht, Abwasser oder von oben einfließendes Regenwasser in die Kammern 30 und 34 einzutragen. Zusätzlich ist im Bereich 86 und 90 dafür zu sorgen, dass kein Regenwasser oder Schmutzwasser im Überflutungsfall oder bei Regen eingebracht wird.

Über eine Leitung 96, die in einen Kanal 98 mündet, der strömungsmäßig mit der Wärmetauschkammer 64 verbunden ist, wird in der Wärmetauschkammer 64 erwärmtes Wasser abgeführt und kann zur Beheizung von Wohnräumen oder anderen vorteilhaften, oben beschriebenen Anwendungen verwendet werden. In gleicher Weise ist die Wärmetauschkammer 72 strömungsmäßig über einen Kanal 102 mit einer Leitung 100 verbunden. Die Kanäle 98, 102 sind bevorzugt als flexible Spaltleitungen ausgebildet. Beide Wärmetauschkammern 65, 72 sind jeweils mit nicht dargestellten Zufuhrleitungen verbunden, über die Wärmetauschmedium, nachdem es seine Wärme abgegeben hat, wieder zugeführt werden kann. Auf diese Weise ist jeweils ein Wärmetauschkreislauf realisiert.

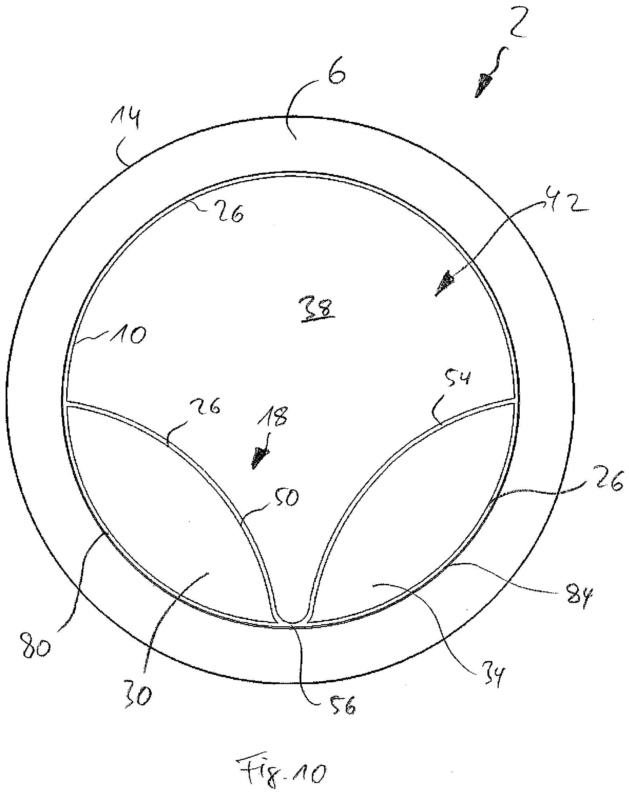

Ein Abwasserrohr 2 in einer weiteren bevorzugten Ausführungsform ist in FIG. 10 im Querschnitt dargestellt. Das Abwasserrohr 2 weist einen im Wesentlichen zylinderförmigen Mantel 6 bzw. Rohrmantel auf, der beispielsweise aus Gusseisen, Beton, Polyethylen (PE-Rohr), Glasfaser/Kunststoff (GFK-Rohr), Steinzeug, Polypropylen (PP), Graugussrohr oder PVC-Rohr besteht bzw. wenigstens eines dieser Materialien umfasst. Der Mantel 6 weist eine Innenfläche 10 und eine Außenfläche 14 auf. In den Mantel 6 ist ein Einlegeteil bzw. Einsetzteil 18 eingelegt, welches aus EPDM gefertigt ist. Im Gegensatz zu herkömmlichen Abwasserrohren, die im Wesentlichen nur aus einem Rohrmantel bestehen, umfasst das erfindungsgemäße Abwasserrohr 2 den Mantel 6 bzw. Rohrmantel und das Einlegeteil bzw. Einsetzteil18.

Das Einlegeteil bzw. Einsetzteil 18 weist einen Einlegemantel 26 auf, der zwei Kammern 30, 34 begrenzt. Ein Durchflussquerschnitt 38 für Abwasser wird in einem oberen Bereich 42 durch die Innenfläche 10 und in einem unteren Bereich durch eine Flanke 50 des Einlegemantels 26, die die Kammer 30 teilweise begrenzt und eine Flanke 54 des Einlegemantels 26, die die Kammer 34 teilweise begrenzt, gebildet. Der Durchflussquerschnitt 38 für Abwasser hat im Querschnitt gesehen im unteren Bereich 46 eine V-Form mit konvex gebogenen Flanken 50, 54. Die beiden Flanken 50, 54 treffen sich an einem tiefsten Punkt bzw. Scheitelpunkt 56. Die in FIG. 10 dargestellte Ausführung unterscheidet sich von der in FIG. 1 gezeigten Ausführung dadurch, dass bei der in FIG. 10 gezeigten Ausführung keine Wärmetauschkammern vorgesehen sind (diese sind in FIG. 1 mit den Bezugszeichen 64 und 72 bezeichnet).

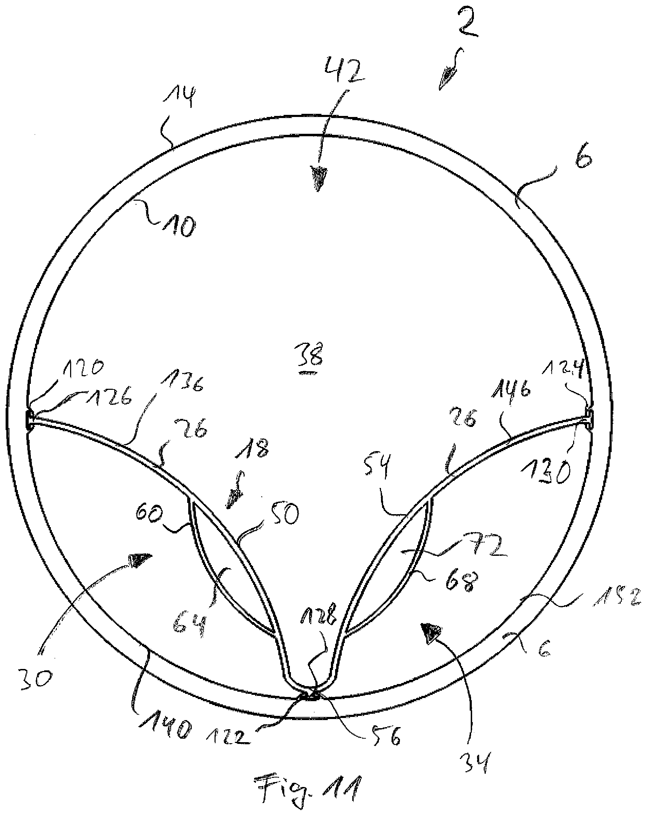

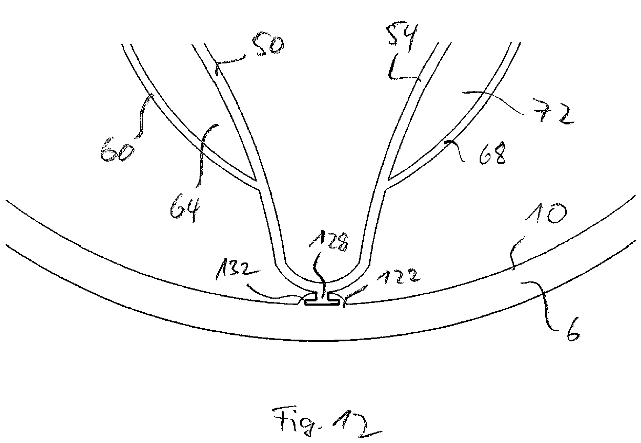

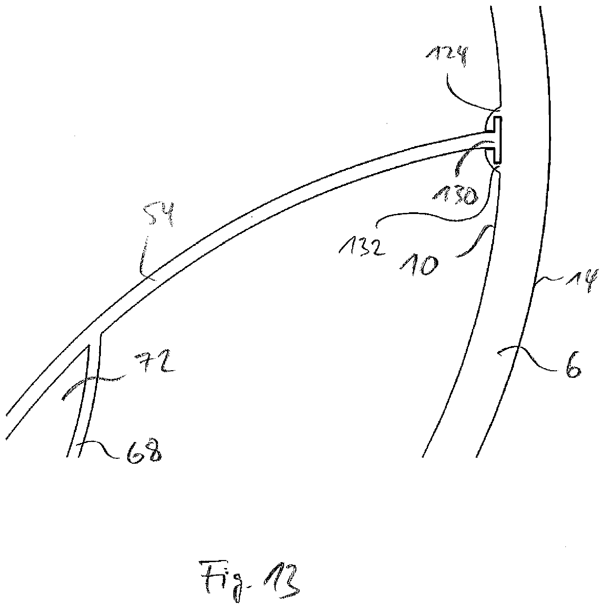

Ein Abwasserrohr 2 in einer weiteren bevorzugten Ausführungsform ist in FIG. 11 dargestellt. Das im Querschnitt dargestellte Abwasserrohr 2 weist einen im Wesentlichen zylinderförmigen Mantel 6 bzw. Rohrmantel auf, der beispielsweise aus Gusseisen, Beton, Polyethylen (PE-Rohr), Glasfaser/Kunststoff (GFK-Rohr), Steinzeug, Polypropylen (PP), Graugussrohr oder PVC-Rohr besteht bzw. wenigstens eines dieser Materialien umfasst. Der Mantel 6 weist eine Innenfläche 10 und eine Außenfläche 14 aus. An dem Mantel 6 ist ein Einlegeteil bzw. Einsetzteil 18 an drei Stellen befestigt. Der Mantel weist dazu an seiner Innenfläche 10 drei Haltelemente 120, 122, 124 auf und das Einlegeteil bzw. Einsetzteil 18 weist drei Befestigungselemente 126, 128, 130 auf. Das jeweilige Befestigungselement 126, 128, 130 ist dabei als Kederleiste ausgebildet, die in einer Längsrichtung senkrecht zu dem gezeigten Querschnitt verläuft. Das jeweilige Halteelement 120, 122, 124 weist jeweils einen Vorsprung 132 auf (siehe dazu FIGs. 12 und 13), der von der Innenfläche radial nach innen weist und eine Innenkontur aufweist, in der die Kederleiste formschlüssig aufgenommen werden kann. Das Einlegeteil bzw. Einsetzteil 18 ist beispielsgemäß aus EPDM bzw. Kunststoff gefertigt. Die jeweilige Kammer zwischen jeweils zwei Haltelementen 120, 122 und 122, 124 besitzt eine Vorspannung, die zu einer Ausdehnung in das Innere des Abwasserrohrs führt und in elastischer Weise dem durchströmenden Wasser nachgibt.

Das Einlegeteil bzw. Einsetzteil 18 weist einen Einlegemantel 26 auf, der zwei Kammern 30, 34 teilweise begrenzt. Die Kammer 30 wird begrenzt durch einen Abschnitt 136 des Einlegemantels 26, der zwischen den Haltelementen 120 und 122 verläuft und einen Abschnitt 140 der Innenfläche 10 des Mantels 6. Die Kammer 34 wird begrenzt durch einen Abschnitt 146 des Einlegemantels 26 und einen Abschnitt 152 der Innenfläche 10 des Mantels 6.

Ein Durchflussquerschnitt 38 für Abwasser wird in einem oberen Bereich 42 des Abwasserrohrs 2 durch die Innenfläche 10 und in einem unteren Bereich durch eine Flanke 50 des Einlegemantels 26, die die Kammer 30 teilweise begrenzt und eine Flanke 54 des Einlegemantels 26, die die Kammer 34 teilweise begrenzt, gebildet. Der Durchflussquerschnitt 38 für Abwasser hat im Querschnitt gesehen im unteren Bereich 46 eine V-Form mit konvex gebogenen Flanken 50, 54. Die beiden Flanken 50, 54 treffen sich an einem tiefsten Punkt bzw. Scheitelpunkt 56 im Bereich des Halteelementes 122.

Durch einen Bereich der Flanke 50 und einem Teilabschnitt 60 des Einlegemantels 26 wird eine Wärmetauschkammer 64 begrenzt. In symmetrischer Weise wird durch einen Bereich der Flanke 54 und einem Teilabschnitt 68 des Einlegemantels 26 eine weitere Wärmetauschkammer 72 begrenzt.

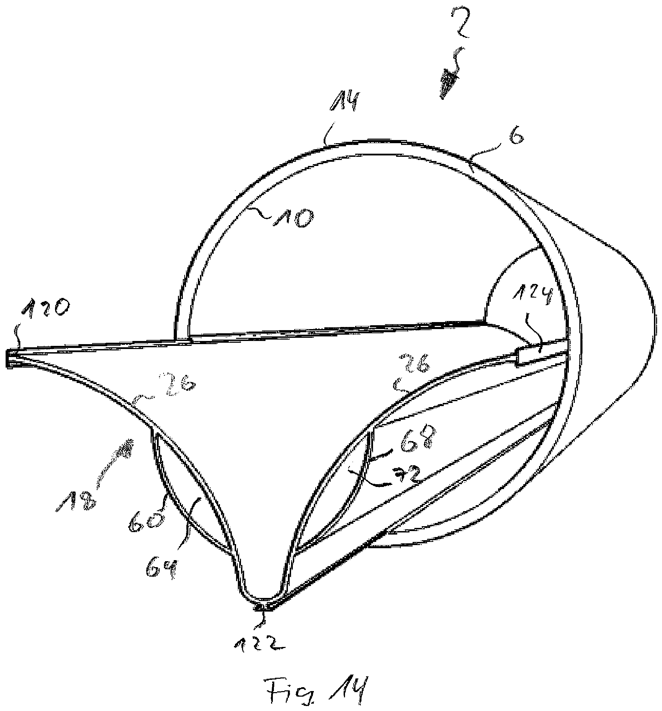

Die FIGs. 12 und 13 zeigen jeweils vergrößerte Darstellungen des Abwasserrohrs 2 im Bereich der Haltelemente 122 bzw. 124. Die FIG. 14 zeigt das Abwasserrohr 2 in einer perspektivischen Darstellung.

## Patentansprüche

1. Abwasserrohr (2) mit veränderbarem Querschnitt, umfassend
• einen Rohrmantel (6) mit einer Innenfläche (10);
• ein Einlegeteil (18), das zumindest bereichsweise an der Innenfläche (10) des Rohrmantels (6) anliegt und alleine oder zusammen mit einem Bereich der Innenfläche (10) des Rohrmantels (6) einen Durchflussquerschnitt (38) für Abwasser definiert;
wobei das Einlegeteil (18) derart ausgebildet ist, dass es bedarfsweise den Durchflussquerschnitt (38) verkleinert oder vergrößert,
**dadurch gekennzeichnet, dass**
das Einlegeteil (18) wenigstens eine radial in einen Innenbereich des Abwasserrohrs hineinragende Kammer (30, 34) aufweist, und wobei diese Kammer (30, 34) in Abhängigkeit von der das Abwasserrohr (2) pro Zeiteinheit durchströmenden Wassermenge den Durchflussquerschnitt (38) verändert, wobei die jeweilige Kammer (30, 34) eine Vorspannung aufweist und in elastischer Weise dem durchströmenden Wasser nachgibt dergestalt, dass mit steigendem Pegelstand in dem Abwasserrohr eine Querschnittsveränderung hervorgerufen wird.

2. Abwasserrohr (2) nach Anspruch 1, wobei das Einlegeteil (18) im Wesentlichen aus Ethylen-Propylen-Dien-Kautschuk besteht.

3. Abwasserrohr (2) mit veränderbarem Querschnitt, umfassend
• einen Rohrmantel (6) mit einer Innenfläche (10);
• ein Einlegeteil (18), das zumindest bereichsweise an der Innenfläche (10) des Rohrmantels (6) anliegt und alleine oder zusammen mit einem Bereich der Innenfläche (10) des Rohrmantels (6) einen Durchflussquerschnitt (38) für Abwasser definiert;
wobei das Einlegeteil (18) derart ausgebildet ist, dass es bedarfsweise den Durchflussquerschnitt (38) verkleinert oder vergrößert,
**dadurch gekennzeichnet, dass**
das Einlegeteil (18) wenigstens eine radial in einen Innenbereich des Abwasserrohrs hineinragende Kammer (30, 34) aufweist, welche mit einem Befüllmedium befüllbar ist, und wobei der freigegebene Durchflussquerschnitt (38) abhängt von der Stärke der Befüllung der Kammer (30, 34) mit dem Befüllmedium, und wobei das Einlegeteil (18) im Wesentlichen aus Ethylen-Propylen-Dien-Kautschuk besteht.

4. Abwasserrohr (2) nach Anspruch 3, wobei die jeweilige Kammer (30, 34) mit einer Leitung zur Zuführung und/oder Abführung des Befüllmediums versehen ist.

5. Abwasserrohr (2) nach einem der Ansprüche 1 bis 4, wobei der maximal freigegebene Durchflussquerschnitt (38) bei maximaler Verengung um im Wesentlichen 30 % verengt wird.

6. Abwasserrohr (2) nach einem der Ansprüche 1 bis 5, wobei das Einlegelement (18) bei maximal verengtem Durchflussquerschnitt (38) ein im Wesentlichen V-förmiges Profil aufweist.

7. Abwasserrohr (2) nach einem der Ansprüche 1 bis 6, wobei wenigstens ein Wärmetauschelement (64, 72) vorgesehen ist, das mit einem Wärmetauschmedium zur Aufnahme der Wärme des Abwassers gefüllt ist.

8. Abwasserrohr (2) nach Anspruch 1, wobei der Rohrmantel (6) an seiner Innenfläche (10) wenigstens ein Haltelement (120, 122, 124) aufweist, und wobei das Einlegeteil (18) wenigstens ein Befestigungselement (126, 128, 130) aufweist, welches mit dem Haltelement (120, 122, 124) eine, bevorzugt lösbare, Befestigung des Einlegeteils (18) am Rohrmantel (6) ermöglicht, wobei das Einlegeteil (18) bereichsweise an wenigstens einem Haltelement (120, 122, 124) am Rohrmantel (6) anliegt und wobei drei Halteelemente (120, 122, 124) vorgesehen sind.

9. Abwasserrohr (2) nach Anspruch 8, wobei das Einlegeteil (18) im Wesentlichen einen V-förmigen Querschnitt aufweist mit einem Scheitelpunkt und zwei symmetrisch in Bezug auf den Scheitelpunkt angeordneten Endpunkten, und wobei das Einlegeteil im Bereich des Scheitelpunktes und der beiden Endpunkte des Querschnittes durch Befestigungselemente (126, 128, 130) an den Haltelementen (120, 122, 124) befestigt ist.

10. Abwasserrohr (2) nach Anspruch 8 oder 9, wobei das jeweilige Befestigungselement als Kederleiste ausgebildet ist,

## Claims

1. A waste-water tube (2) with a variable cross-section, comprising
• a tube sheathing (6) with an inner surface (10);
• an insertion piece (18), which abuts, at least in some sections, on the inner surface (10) of the tube sheathing (6) and defines, either alone or together with a region of the inner surface (10) of the tube sheathing (6), a flow cross-section (38) for waste water;
wherein the insertion piece (18) is designed such that it reduces or enlarges the flow cross-section (38), as required,
**characterized in that**
the insertion piece (18) includes at least one chamber (30, 34) radially projecting into an inner region of the waste-water tube, and wherein said chamber (30, 34) changes the flow cross-section (38) as a function of the quantity of water flowing through the waste-water tube (2) per time unit, the respective chamber (30, 34) being prestressed and resiliently yielding to the water flowing through, in such a way that with a rising level in the waste-water tube, a change of the cross-section is produced.

2. The waste-water tube (2) of claim 1, wherein the insertion piece (18) substantially consists of ethylene-propylene-diene rubber.

3. A waste-water tube (2) with a variable cross-section, comprising
• a tube sheathing (6) with an inner surface (10);
• an insertion piece (18), which abuts, at least in some sections, on the inner surface (10) of the tube sheathing (6) and defines, either alone or together with a region of the inner surface (10) of the tube sheathing (6), a flow cross-section (38) for waste water;
wherein the insertion piece (18) is designed such that it reduces or enlarges the flow cross-section (38), as required,
**characterized in that**
the insertion piece (18) includes at least one chamber (30, 34) radially projecting into an inner region of the waste-water tube, which can be filled with a filling medium, and wherein the released flow cross-section (38) depends on the extent of filling of the chamber (30, 34) with the filling medium, and wherein the insertion piece (18) substantially consists of ethylene-propylene-diene rubber.

4. The waste-water tube (2) of claim 3, wherein the respective chamber (30, 34) is provided with a conduit for feeding and/or draining the filling medium.

5. The waste-water tube (2) of any of claims 1 to 4, wherein the maximum released flow cross-section (38) is reduced by substantially 30 % at maximum narrowing.

6. The waste-water tube (2) of any of claims 1 to 5, wherein the insertion element (18), in case of a maximally narrowed flow cross-section (38), has a substantially V-shaped profile.

7. The waste-water tube (2) of any of claims 1 to 6, wherein at least one heat-exchanger element (64, 72) is provided, which is filled with a heat-exchanger medium for absorbing the heat of the waste water.

8. The waste-water tube (2) of claim 1, wherein the tube sheathing (6) includes on its inner surface (10) at least one retaining element (120, 122, 124), and wherein the insertion piece (18) includes at least one fastening element (126, 128, 130) enabling, together with the retaining element (120, 122, 124) to fasten, preferably in a detachable manner, the insertion piece (18) on the tube sheathing (6), wherein the insertion piece (18) abuts in some sections on at least one retaining element (120, 122, 124) on the tube sheathing (6) and wherein three retaining elements (120, 122, 124) are provided.

9. The waste-water tube (2) of claim 8, wherein the insertion piece (18) has a substantially V-shaped cross-section with a vertex and two end points arranged symmetrically relative to the vertex, and wherein the insertion piece (18) is fastened on the retaining elements (120, 122, 124) in the region of the vertex and the two end points of the cross-section by means of fastening elements (126, 128, 130).

10. The waste-water tube (2) of claim 8 or 9, wherein the respective fastening element is designed as a keder rail.

## Revendications

1. Conduite d'égout (2) ayant une section modifiable, comprenant
• une gaine de tuyau (6) avec une surface intérieure (10);
• une pièce d'insertion (18) qui s'appuye, au moins par sections, à la surface intérieure (10) de la gaine de tuyau (6) et défine, à elle seule ou avec une région de la surface intérieure (10) de la gaine de tuyau (6), une section d'écoulement (38) pour des eaux d'égout;
dans laquelle la pièce d'insertion (18) est conçue de façon qu'elle réduit ou agrandit la section d'écoulement (38), suivant les besoins,
**caractérisée en ce que**
la pièce d'insertion (18) comprend au moins une chambre (30, 34) faisant saillie radialement dans une région intérieure de la conduite d'égout et dans laquelle ladite chambre (30, 34) change de section d'écoulement (38) en fonction de la quantité d'eau qui écoule au travers de la conduite d'égout (2) par unité de temps, la chambre (30, 34) respective étant précontrainte et cédant élastiquement à l'eau écoulant, de manière qu'un changement de la section se produit lorsque le niveau dans la conduite d'égout monte.

2. Conduite d'égout (2) selon la revendication 1, dans laquelle la pièce d'insertion (18) consiste essentiellement en caoutchouc éthylène propylène diène.

3. Conduite d'égout (2) ayant une section modifiable, comprenant
• une gaine de tuyau (6) avec une surface intérieure (10);
• une pièce d'insertion (18) qui s'appuye, au moins par sections, à la surface intérieure (10) de la gaine de tuyau (6) et défine, à elle seule ou avec une région de la surface intérieure (10) de la gaine de tuyau (6), une section d'écoulement (38) pour des eaux d'égout;
dans laquelle la pièce d'insertion (18) est conçue de façon qu'elle réduit ou agrandit la section d'écoulement (38), suivant les besoins,
**caractérisée en ce que**
la pièce d'insertion (18) comprend au moins une chambre (30, 34) faisant saillie radialement dans une région intérieure de la conduite d'égout, qui peut être remplie d'un milieu de remplissage et dans laquelle la section d'écoulement (38) libérée dépend du degré de remplissage de la chambre (30, 34) avec le milieu de remplissage et dans laquelle la pièce d'insertion (18) consiste essentiellement en caoutchouc éthylène propylène diène.

4. Conduite d'égout (2) selon la revendication 3, dans laquelle la chambre respective (30, 34) est munie d'une conduite pour alimenter et/ou évacuer le milieu de remplissage.

5. Conduite d'égout (2) selon l'une quelconque des revendications 1 à 4, dans laquelle la section d'écoulement (38) libérée maximum es réduit par essentiellement 30 % à la contraction maximum.

6. Conduite d'égout (2) selon l'une quelconque des revendications 1 à 5, dans laquelle l'élément d'insertion (18), en cas d'une section d'écoulement (38) contracté maximalement, présente un profil essentiellement en forme de V.

7. Conduite d'égout (2) selon l'une quelconque des revendications 1 à 6, dans laquelle au moins un élément changeur de chaleur (64, 72) est prévu, qui est rempli d'un milieu changeur de chaleur pour absorber la chaleur des eaux d'égout.

8. Conduite d'égout (2) selon la revendication 1, dans laquelle la gaine de tuyau (6) comprend sur sa surface intérieure (10) au moins un élément de retenu (120, 122, 124) et dans laquelle la pièce d'insertion (18) comprend au moins un élément de fixation (126, 128, 130) permettant, ensemble avec l'élément de retenu (120, 122, 124) de fixer, de préférence d'une manière détachable, la pièce d'insertion (18) à la gaine de tuyau (6), dans laquelle la pièce d'insertion (18) s'appuye par sections à au moins un élément de retenu (120, 122, 124) à la gaine de tuyau (6) and dans laquelle trois éléments de retenu (120, 122, 124) sont prévus.

9. Conduite d'égout (2) selon la revendication 8, dans laquelle la pièce d'insertion (18) présente une section essentiellement en forme de V avec un apex and deux points finaux disposés symétriquement par rapport à l'apex et dans laquelle la pièce d'insertion (18) est fixée dans la région de l'apex et des deux points finaux de la section aux éléments de retenu (120, 122, 124) au moyen d'éléments de fixation (126, 128, 130).

10. Conduite d'égout (2) selon la revendication 8 ou 9, dans laquelle l'élément de fixation respectif est conçu comme une barre keder.
